# EUROPÄISCHE PATENTSCHRIFT

(11) **EP 1 377 628 B1**
(45) Veröffentlichungstag und Bekanntmachung des Hinweises auf die Patenterteilung: **02.02.2011**
(21) Anmeldenummer: 02729997.3
(22) Anmeldetag: 12.03.2002
(51) Int. Cl.: C08G 77/30, C08F 230/08, C07F 7/08

(54) **PHOSPHORHALTIGE, ORGANISCH POLYMERISIERBARE SILANE UND DAMIT HERGESTELLTE KIESELSÄURE-POLYKONDENSATE**
PHOSPHOROUS-CONTAINING, ORGANIC POLYMERISABLE SILANES AND SILICIC ACID POLYCONDENSATES PRODUCED THEREWITH
SILANES ORGANIQUEMENT POLYMERISABLES ET CONTENANT DU PHOSPHORE, ET POLYCONDENSATS D'ACIDE SILIQUE REALISES AVEC CES SILANES

(30) Priorität: 13.03.2001 DE 10111955; 05.07.2001 DE 10132654
(43) Veröffentlichungstag der Anmeldung: 07.01.2004
(73) Patentinhaber: Fraunhofer-Gesellschaft zur Förderung der angewandten Forschung e.V., 80686 München (DE)
(72) Erfinder: WOLTER, Herbert, 97941 Tauberbischofsheim (DE)
(74) Vertreter: Olgemöller, Luitgard Maria
(86) Internationale Anmeldenummer: PCT/EP2002/002715
(87) Internationale Veröffentlichungsnummer: WO 2002/088222

(56) Entgegenhaltungen:
- DE-A- 2 758 414
- DE-A- 4 011 044
- DE-A- 4 310 733
- DE-C- 4 416 857

## Beschreibung

Die vorliegende Erfindung betrifft neuartige Moleküle, die jeweils mindestens eine Silangruppe mit ggf. hydrolysierbaren Resten, mindestens eine organisch polymerisierbare Gruppe und mindestens eine reaktionsfähige oder die Eigenschaften des Moleküls modulierende phosphorhaltige Gruppe aufweisen. Weiterhin betrifft die Erfindung Hydrolyse- und Kondensationsprodukte dieser Moleküle, die unter Verwendung dieser Moleküle hergestellt wurden. Und schließlich betrifft die Erfindung Verfahren zum Herstellen der erfindungsgemäßen Moleküle.

Kieselsäureheteropolykondensate, erhältlich durch Hydrolyse und Kondensation von Silanen mit hydrolysierbaren Gruppen, sind seit langem bekannt (siehe z.B. DE PS 27 58 414). Solche Kondensate können zu vielerlei Produkten verarbeitet werden, beispielsweise zu Überzügen, Beschichtungen, Membranen oder Bulkmaterialien. Die zugrundeliegenden Silane können auch Doppelbindungen oder andere organisch reaktive Gruppen aufweisen, durch die sie in ein organisches Netzwerk einpolymerisiert werden können (siehe z.B. De 40 11 044 C2 und DE 44 05 261 A1). Aus solchen Materialien lassen sich beispielsweise Dentalmaterialien fertigen (siehe z.B. 41 33 494 C2).

Es sind auch Silanverbindungen bekannt, die eine phosphorhaltige Gruppe im Molekül tragen. Von phosphorhaltigen Materialien ist seit langem bekannt, daß sie flammhemmende Eigenschaften besitzen können. In der DE 198 32 094 A1. wird vorgeschlagen, Dispersionen mit zumindest einem wasserunlöslichen Organopolymer und einer in Wasser dispergierbaren Siliciumverbindung mit einer dispergierbaren Phosphorverbindung zu mischen, um die aus den Dispersionen herstellbaren Textilausrüstungen flammfest zu machen. In einer speziellen Ausgestaltung werden als Phosphorverbindungen solche Verbindungen eingesetzt, die zusätzlich ein Siliciumatom im Molekül tragen, beispielsweise Triethoxysilylethanphosphorsäurediethylester, das im Handel erhältlich ist. Gemäß EP 525 573 A1 soll es möglich sein, phosphorgruppenhaftige Organosilane als lmmunregulantien einzusetzen. Im US-Patent 4,772,408 werden Phosphonatsilane als Stabilisatoren für Frostschutzmittel vorgeschlagen.

Die Synthese der oben erwähnten phosphorhaltigen Silane kann prinzipiell über zwei Routen erfolgen: Entweder wird ein eine organische Doppelbindung enthaltendes Silan mit einer P-H-Bindung eines Phosphonates oder dgl. umgesetzt, oder eine Alkoxygruppe am Phosphor wird mit einem Halogen umgesetzt.

Aufgabe der vorliegenden Erfindung ist es, neuartige anorganisch-organische, durch Hydrolyse und Kondensation von silanhaltigen Edukten erhältliche Harze bereitzustellen, in die phosphorhaltige Gruppen enthaltende Monomere einkondensierbar oder einkondensiert sind. Die Anwesenheit der phosphorhaltigen Gruppen soll diesen Materialien bzw. den daraus herstellbaren Beschichtungen oder Bulkmaterialien entweder durch ihre chemische Funktionalität (z.B. Umsetzung mit komplexierbaren Gruppen) oder ihre physikalischen Eigenschaften (z.B. verbesserter Flammschutz, höhere Polarität) veränderte Eigenschaften verleihen. Außerdem ist es Aufgabe der Erfindung, eine neuartige Gruppe von Verbindungen bereitzustellen, die sich für die Herstellung solcher Harze eignen und die darüber hinaus eine verbesserte Verankerung mit anorganischen und/oder organischen Bestandteilen dieser Harze ermöglichen.

Erfindungsgemäß werden Verbindungen bereitgestellt, die einen hydrolysierbaren Silanrest oder dessen Hydrolyseprodukte, einen reaktionsfähigen phosphorhaltigen. Rest oder einen phosphorhaltigen Rest, der bei Einbau der Verbindungen in ein anorganisches und/oder organisches Netzwerk die Eigenschaften des Netzwerkes moduliert, sowie einen organisch polymerisierbaren Rest enthalten.

Alle drei Molekülteile können entsprechend JTB (ISC) 1992, S.61-72 und Polymer + Materials Research Symposium 1993, Bayreuth, S.14-17, zu Eigenschaftsmodifikationen genutzt werden. Dabei verleiht der phosphorhaltige Molekülteil den mit den erfindungsgemäßen Verbindungen hergestellbaren Massen zusätzliche Variabilität, die zu besonderen und neuen Eigenschaftskombinationen führt.

Mit Hilfe solcher Verbindungen lassen sich entweder die oben erwähnten Harze herstellen, aus denen sich organische vernetzte Produkte herstellen lassen, oder aber sie können direkt zu organischen Polymerisaten verarbeitet werden, die ggf. anschließend durch Hydrolyse und ggf. Kondensation der dabei entstandenen Gruppen weiter vernetzt werden.

Die Erfindung stellt dementsprechend Verbindungen der Formel I bereit

(XₐR_{b}Si)ₘ[―{B}―([O]ₒP[O]ₚR'_{c}Y_{d})ₙ]_{4-a-b} I

worin die Reste und Indices die folgende Bedeutung haben:
B ist ein geradkettiger oder verzweigter Rest mit mindestens einer organisch polymerisierbaren Gruppe, bei der es sich vorzugsweise um eine C=C-Doppelbindung handelt, und mindestens 3, eher 4, und vorzugsweise bis zu 50 Kohlenstoffatomen,
X ist ein vom Siliciumatom abhydrolysierbarer Rest, insbesondere Wasserstoff, Halogen und hier vorzugsweise Chlor, Hydroxy, Alkoxy mit vorzugsweise 1 bis 4 Kohlenstoffatomen, Acyloxy mit vorzugsweise 2 bis 5 Kohlenstoffatomen, Alkylcarbonyl mit vorzugsweise 2 bis 6 Kohlenstoffatomen, Alkoxycarbonyl mit vorzugsweise 2 bis 6 Kohlenstoffatomen oder NR" und kann in einer Verbindung der Formel I gegebenenfalls unterschiedliche Bedeutung haben,
R ist ggf. substituiertes Alkyl, Alkenyl, Aryl, Alkylaryl oder Arylalkyl mit vorzugsweise 1-6 Kohlenstoffatomen für offenkettige aliphatische Gruppen und vorzugsweise 6 bis 12 Kohlenstoffatome für cycloaliphatische oder aromatische Gruppen, wobei die Substitution beispielsweise mit Halogen oder Aminogruppen, sauerstoffhaltigen und/oder schwefelhaltigen Resten erfolgen kann,
R' kann dieselbe Bedeutung wie R haben,
Y ist CI, OH oder OR'.
R" ist Wasserstoff, Alkyl mit vorzugsweise 1-4 Kohlenstoffatomen oder Aryl mit vorzugsweise 6-12 Kohlenstoffatomen,
a ist 0, 1, 2 oder 3,
bist 0,1, oder 2,
a + b sind zusammen 1, 2 oder 3,
c ist 0, 1 oder 2,
d ist 0, 1 oder 2,
c + d sind zusammen 2
m ist vorzugsweise 1, kann aber auch 2, 3, 4 oder ggf. sogar eine höhere Zahl sein, aber nur, wenn a + b 3 bedeutet,
n ist vorzugsweise 1, kann aber auch 2, 3, 4 oder ggf. sogar eine höhere Zahl sein,
o ist 0 oder 1, und
p ist 0 oder 1.

B ist ein Rest mit mindestens 2 Bindungen (nämlich mindestens einer zu der den Phosphor enthaltenden Gruppe und mindestens einer zu der Silangruppe). Wenn m und/oder n größer als 1 sind, sind mehrere Silan- bzw. phosphorhaltige Reste an jeweils unterschiedlichen Atomen (z.B. C-Atomen) im Rest B gebunden, die Zahl dieser Bindungen von B nimmt dann entsprechend zu. Wenn a + b zusammen 1 oder 2 ist, wird die Anzahl der B-haltigen Reste am Silicium, die mit 4-a-b definiert ist, 2 oder 3. Das bedeutet, daß das Siliciumatom zwischen zwei oder sogar 3 solchen Gruppen angeordnet ist. In solchen Fällen soll jedoch definitionsgemäß m gleich 1 sein (andernfalls würde Formel I auch Polykondensate umfassen). Ausgestaltungen mit a+ b gleich 1 oder 2 sind vor allem dann möglich, wenn der Rest B sterisch wenig anspruchsvoll ist.

B selbst kann die oder mindestens eine der organisch polymerisierbaren Gruppen in seiner Hauptkette (d.h. in der Kette, die den Phosphor enthaltenden Rest und den Silanrest verbindet) enthatten; häufig wird diese oder mindestens eine dieser Gruppen jedoch in einer Seitenkette anzutreffen sein. Die organisch polymerisierbare Gruppe(n) kann/können beliebig ausgewählt sein. Dabei kann es sich z.B. um Vinyl-, Allyl, Norbornen-, Glycidyl- Acryl- oder Methacrylgruppen handeln. Vorzugsweise leitet sich B von einer substituierten oder unsubstituierten Verbindung mit Acrylat- oder Methacrylatgruppen ab. B kann ein durchgehendes Kohlenstoffskelett aufweisen, die Kohlenstoffkette(n) (Haupt- und/oder Seitenkette(n) können aber auch durch Heteroatome bzw. Gruppen wie O, S, SO, NH, NHCO, PR, POR, CONHCO ,COO, NHCOO oder dergleichen unterbrochen sein. Außerdem kann B über solche Gruppen an den Silanrest gebunden sein. Das Kohlenstoffskelett kann ausschließlich aliphatisch sein, und zwar mit offenen und/oder geschlossenen Strukturen, B kann aber auch einen oder mehrere aromatische(n) Kem(e) oder kondensierte Systeme oder Triazingruppen oder dgl. aufweisen, z.B. Bisphenol-A-Strukturen oder dergleichen. Ferner können die Gruppen oder Strukturen beliebig substituiert sein, z.B. mit Säure-, Säureamid-, Ester oder Aminogruppen.

In einer bevorzugten Ausgestaltung enthält B mindestens eine Acrylat- oder Methacrylatgruppe. Wie nachstehend bei der Beschreibung der möglichen Herstellverfahren für die erfindungsgemäßen Verbindungen erläutert wird, ist es besonders bevorzugt, ausgehend von Oligo- oder Polyacrylaten oder -methacrylaten mit mindestens 3 (Meth)acrylgruppen zu Verbindungen zu gelangen, in denen B einen Rest darstellt, in welchem mindestens 2 (Meth)Acrylatgruppen mit jeweils mindestens einem Phosphor enthaltenden Molekül und mindestens einem Silanmolekül oder dessen Vorstufe umgesetzt wurde, so daß der Rest B mindestens 2 (Meth)Acrylatgruppen weniger aufweist als das Oligo- oder Poly(meth)acrylat, von dem ausgehend die erfindungsgemäße Verbindung hergestellt wurde. Statt dessen ist es aber auch möglich, von Oligo- oder Polyacrylaten oder -methacrylaten auszugehen, die nur eine zusätzliche (Meth)acrylatgruppe, verglichen mit den Verbindungen der vorliegenden Erfindung, aufweisen, wenn diese (Meth)acrylate zusätzlich eine Hydroxygruppe besitzen, über die sich z.B. ein Isocyanatosilan ankoppeln läßt. Anstelle von (Meth)acrylaten eignen sich natürlich auch andere organisch polymerisierbare Reste, z.B. Alkylenoxidgruppen, insbesondere Glycidethergruppen, oder Vinyl- oder Allyl- oder Norbomengruppengruppen. Auch mehrere verschiedene solcher Gruppen in B oder dessen Vorstufen sind prinzipiell möglich. Bevorzugt als Strukturelemente von B sind unter anderem die Trimethylolpropangruppe, die Pentaerythritgruppe und die Glycerolstruktur.

Die den Phosphor enthaltende Gruppe kann ausgewählt sein unter Phosphaten (Estern der Phosphorsäure H₃PO₄), Phosphonaten (Estern der Phosphonsäure HP(O)(OH)₂), Trialkylestem der mit der Phosphonsäure tautomeren phosphorigen Säure, Estern der Phosphinsäure H₂P(O)(OH), Trialkyl/arylphosphinoxiden und Trialkyllarylphosphinen, worin in der Regel die am Phosphor befindlichen "Säureprotonen" der zugrundeliegenden Säure durch eine Alkylgruppe und die Hydroxygruppen der zugrundeliegenden Säure durch Alkoxygruppen ersetzt sind. Der Rest (XₐR_{b}Si)ₘ―{B}― liegt dabei vorzugsweise direkt am Phosphoratom gebunden vor (d.h. o ist null), da Phosphorsäureester-Gruppen dazu neigen, in wäßrigem Medium abzuhydrolysieren, so daß solche Moleküle zumindest in bestimmter Umgebung weniger stabil sind. Aufgrund ihrer weiter unten näher erläuterten Eigenschaften sind Ester der Phosphonsäure und Ester der Phosphinsäure am meisten bevorzugt.

Dementsprechend bedeutet in der Gruppe [O]ₒP[O]ₚR'_{c}Y_{d} der Formel 1 in bevorzugten Ausgestaltungen der Erfindung O gleich null. Ebenfalls bevorzugt ist c gleich 0 oder 1, und ganz bevorzugt ist c gleich 0. In all diesen als bevorzugt genannten Ausgestaltungen ist p vorzugsweise 1. R' ist vorzugsweise Alkyl oder Aryl, insbesondere Methyl, Ethyl, n- oder Isopropyl oder n-, iso- oder t-Butyl, und Y ist vorzugsweise Alkoxy oder Aryloxy, insbesondere Methoxy, Ethoxy, n- oder lsopropoxy oder n-, iso- oder t-Butoxy. Statt dessen können die Phosphonsäure- oder Phosphinsäureester auch in hydrolysierter Form vorliegen, d.h. Y kann auch die Bedeutung Hydroxy haben.

Die am Siliciumatom befindlichen Substituenten oder Reste X und R können beliebig ausgewählt werden. In der Literatur über die anorganisch-organischen, Siliciumatome enthaltenden Materialien, z.B. diejenigen, die unter der Bezeichnung "ORMOCERE"^{®} im Handel sind, ist viel über die jeweiligen Eigenschaften geschrieben worden, die die jeweiligen Silanreste dem Kondensat oder organisch polymerisierten Netzwerk verleihen, so daß hier keine detaillierten Erläuterungen nötig sind. Mit X werden hydrolysierbare Reste bezeichnet. Mit diesen Gruppen, die auch als anorganische Netzwerkbildner bezeichnet werden, werden im Zusammenspiel mit ggf. vorhandenen organischen Netzwerkbildnern, nämlich organisch polymerisierbaren Gruppen (vorliegend also die Gruppe(n) [―{B}―([O]ₒP[O]ₚR'_{c}Y_{d})ₙ]), physikalische Eigenschaften des sich bildenden Netzwerks eingestellt wie Härte bzw. Flexibilität, thermische Stabilität, thermischer Ausdehnungskoeffizient. Die nicht organisch polymerisierbaren Gruppen R werden als Netzwerkwandler bezeichnet; mit ihrer Wahl lassen sich ebenfalls eine Reihe von Eigenschaften beeinflussen.

Die Herstellung der erfindungsgemäßen Verbindungen kann auf vielerlei Arten erfolgen.

Ein erstes Verfahren geht von Verbindungen II

(XₐR_{b}Si)ₘ[―{B¹}]_{4-a-b} II

aus, worin X, R, a, b und m die Bedeutung wie in Formel I definiert haben und B¹ eine Gruppe ist, die eine C=C-Doppelbindung mehr enthält als die Gruppe B. Diese Verbindungen werden mit

H-P[O]ₚR'_{c}Y_{d} III

umgesetzt, worin R', Y, c und d die oben angegebenen Bedeutungen besitzen können und p 1 ist. Das Hydrid reagiert mit einer der Doppelbindungen an der Gruppe B¹ unter Ausbildung der Gruppierung -CHR¹-CR²R²-P[O]ₚR'_{c}Y_{d}, wobei die Gruppe CHR¹-CR²R³ Bestandteil von B ist. Auf diese Weise lassen sich Phosphonsäureester-Derivate und Phosphinsäureester-Derivate herstellen. Vorzugsweise erfolgt die Reaktion unter Zugabe eines radikalischen (z.B. bei nichtaktivierten Doppelbindungen) oder basischen (z.B. bei aktivierten Doppelbindungen) Katalysators, z.B. einem Natriumalkoholat. Besonders günstig ist es, wenn die in die Reaktion involvierte Doppelbindung von B¹ Teil eines Michaelsystems ist, z.B. Teil einer (Meth)acrylatgruppe. In der Verbindung III kann d beispielsweise 2 bedeuten und Y eine Alkoxygruppe sein, oder c und d können jeweils 1 bedeuten und R' kann eine Alkylgruppe und Y eine Alkoxygruppe sein.

Ein zweites Verfahren geht von Verbindungen IV

(XₐR_{b}Si)ₘ[―{B²}]_{4-a-b} IV

aus, in worin X, R, a, b und m die Bedeutung wie in Formel I definiert haben und B² eine Gruppe ist, die eine OH-Gruppe mehr enthält als die Gruppe B. Diese Verbindungen werden in Gegenwart eines basischen Katalysators mit POCl₃ umgesetzt, wobei eine Gruppe (XₐR_{b}Si)ₘ[―{B}―]_{4-a-b}O unter HCl-Abspaltung an das Phosphoratom gebunden wird. Die verbleibenden Chloridatome werden anschließend ggf. durch Umsetzung mit geeigneten Alkoholaten verdrängt; sowohl Chlorid- als auch Alkoholatgruppen sind der späteren Hydrolyse zugänglich. Bei dieser Reaktion, die zu Phosphorsäureestem führt, muß bei nicht sehr sorgfältiger Reaktionsführung mit Gemischen des gewünschten Reaktionsprodukts mit Produkten gerechnet werden, in denen das Silan zweifach addiert wurde, so daß Reinigungsschritte erforderlich sein können.

Ein drittes Verfahren nutzt die Umsetzung der Verbindung IV mit Phosphorpentoxid. Das Produkt ist ein entsprechender Phosphorsäuremonoester der Formel 1, worin Y OH ist, O und p 1 sind, c null ist und d 2 ist.

Ein viertes Verfahren nutzt die Arbuzov-Reaktion. Dabei werden Verbindungen V

(XₐR_{b}Si)ₘ[―{B³}]_{4-a-b} V

in denen B³ eine von B abgeleitete Gruppe ist, die ein zusätzliches Halogenatom enthält, mit Phosphorverbindungen der Formel VI umgesetzt,

R'_{c}PY_{d}, VI

worin R' und Y die für Formel I angegebenen Bedeutungen besitzen und c 0, 1 oder 2 ist, d 1, 2 oder 3 ist und c + d 3 ist. Werden Phosphorverbindungen VI eingesetzt, in denen c gleich 0 ist, gelangt man zu Phosphonsäureestem. Werden Phosphorverbindungen VI eingesetzt, in denen c gleich 1 ist, gelangt man zu Phosphinsäureestern, und werden Phosphorverbindungen VI eingesetzt, in denen c gleich 2 ist, gelangt man zu Phosphinoxidverbindungen.

Die erwähnten Reaktionswege zur Herstellung der Verbindungen I sind selbstverständlich nicht erschöpfend. So können auf anderen Wegen Verbindungen hergestellt werden, wobei zusätzliche funktionelle Gruppen in den Rest B eingeführt werden. Ein Beispiel ist die Umsetzung von Verbindungen der Formel III mit Silanen der Formel IV, die jedoch anstelle einer Hydroxygruppe zusätzlich eine Aldehydgruppe aufweisen, und anschließend mit einem Säurechlorid in Gegenwart eines Silans:

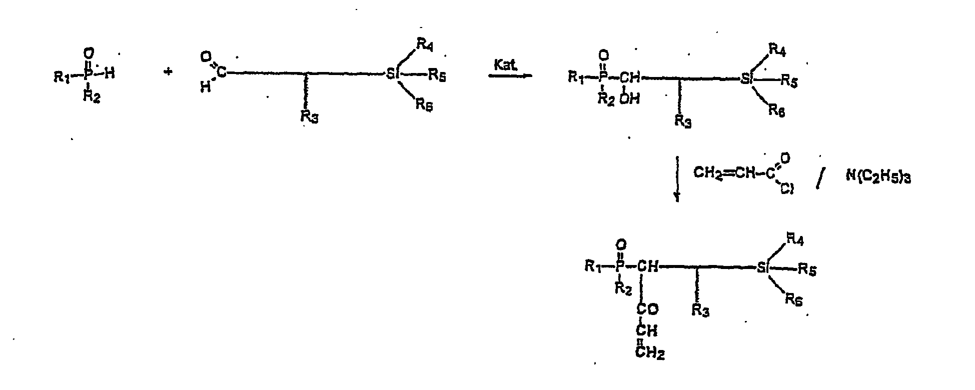

Solche Umsetzungen sind auch z.B. mit entsprechenden Ketonen statt der Aldehyde möglich.

Silane der Formeln II und IV sind in großer Zahl bekannt. Verbindungen der Formel II lassen sich beispielsweise dadurch herstellen, daß ein Silan der allgemeinen Formel VII

xₐR_{b}SiR⁴D, VII

in der X und R wie in Formel I definiert sind, a + b 3 ist, R⁴Alkyl, Arylen oder Alkylenarylen ist und D die Gruppe SH, PR⁵H oder POR⁵H mit R⁵ Wasserstoff, Alkyl oder Aryl bedeutet, einer Additionsreaktion mit einer Verbindung B⁴ unterwirft, die eine C=C-Doppelbindung mehr enthält als die Gruppe B¹ in Formel II. Im entstehenden Produkt mit der Formel II ist B¹ über eine Gruppe R⁴D' mit D' gleich S, PR⁵ oder POR⁵ am Siliciumatom gebunden.

Alternativ lassen sich Silane der Formeln II und IV dadurch herstellen, daß ein Silan der Formel

XₐR_{b}SiR⁴NCO VIII

worin X, R, a, b und R⁴ dieselbe Bedeutung haben wie in Formel VII, einer Kondensationsreaktion mit einer Verbindung B⁵ unterworfen wird, die ein hydroxy- oder amino- oder SH-substituiertes Derivat der Gruppe B¹ in Formel II ist. Im entstehenden Produkt mit der Formel II ist B¹ über eine Gruppe R⁴D' mit D' gleich NHC(O)O an das Siliciumatom gebunden.

Weiterhin lassen sich Silane der Formeln II und IV z.B. dadurch erzeugen, daß ein Silan mit der Formel IX

XₐR_{b}SiH IX

Worin X, R, a und B dieselbe Bedeutung haben wie in Formel VII, einer Hydrosilylierungsreaktion mit einer Verbindung B⁴ unterworfen wird, die eine C=C-Doppelbindung mehr enthält als die Gruppe B¹ in Formel II.

Verbindungen der Formel IV sind auf die gleiche Weise erhältlich, wobei anstelle der Verbindungen B⁴ oder B⁵ Verbindungen B⁶ eingesetzt werden, die im Vergleich zu den Verbindungen B⁴ und B⁵ eine Hydroxygruppe (mehr)enthalten.

Beispiele für solche Verbindungen finden sich z.B. in der DE 41 33 494 A1 der DE 43 10 733 A1, der DE 44 05 261, der DE 44 16 857 A1 oder der DE 198 32 965 A1.

Für den Fachmann ist es klar, daß die vorstehenden Herstellungswege, in denen allesamt die den Phosphor enthaltende Gruppe als letztes an das herzustellende Molekül gekoppelt wird, auch umgedreht werden können, d.h. daß erst die den Phosphor enthaltende Gruppe an entsprechende Derivate von B angebunden werden und erst danach die das Silicium enthaltende Gruppe.

Wenn die Verbindungen der Formel I Gruppen X und/oder Y im Molekül enthalten, können sie einer Hydrolyse unterworfen werden. Da die Hydrolysebedingungen insbesondere dann, wenn X und Y Alkoxygruppen sind, für die Gruppen Y von denen für die Gruppen X abweichen, kann die Hydrolyse selektiv erfolgen. So werden Alkoxygruppen in Gegenwart von Wasser und ggf. einem Lösungsmittel bereits unter milden Bedingungen vom Siliciumatom abgespalten; am Phosphoratom bleiben sie erhalten. Die Hydrolyse von Alkoxygruppen am Phosphoratom gelingt dagegen spezifisch in Gegenwart von Trimethylsilylbromid und Methanol als Katalysator. Unter schärferen Bedingungen (zum Beispiel in wäßrig-saurem Medium bei erhöhten Temperaturen) lassen sich die Gruppen von beiden Atomarten abspalten.

Das nachfolgende Schema soll dies verdeutlichen:
1. Hydrolyse der Photosphonat und Alkoxygruppe 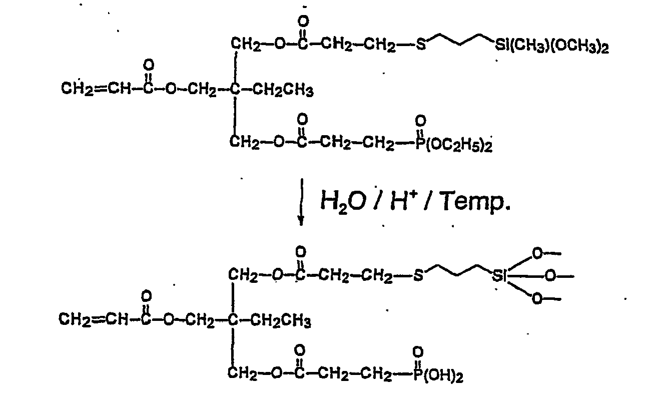
2. Selektive Hydrolyse der Alkoxygruppe möglich 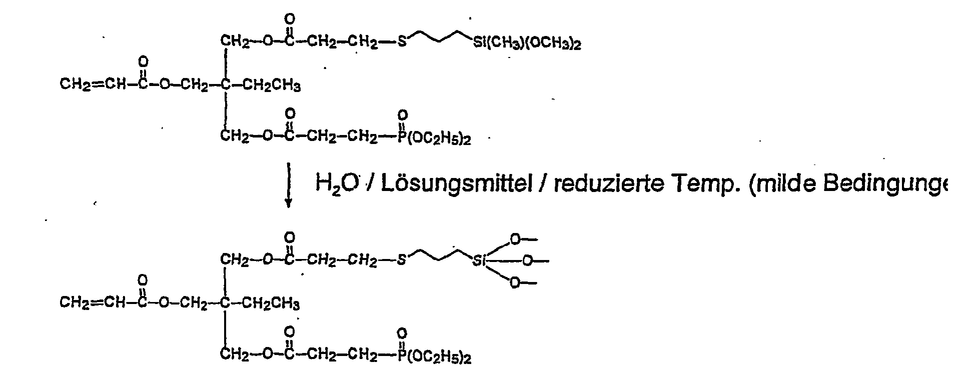
3. Selektive Hydrolyse der Phosphonat möglich

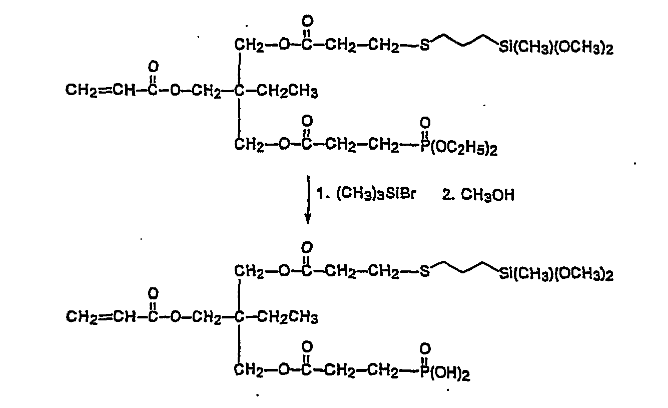

Die erfindungsgemäßen Verbindungen der Formel I lassen sich dann, wenn sie hydrolysierbare oder hydrolysierte Reste am Siliciumatom enthalten, in anorganische Netzwerke mit Si-O-Si-Einheiten einbauen. Außerdem sollten sie sich über die Reste B in organische Polymerstrukturen einbauen lassen, oder es sollten sich solche Strukturen durch die organisch polymerisierbaren Gruppen der Reste B aufbauen lassen. Anorganisch kondensierte Kieselsäureheteropolykondensate und Produkte, die durch organische Vernetzung solcher Kondensate erhältlich sind, sind in großer Zahl bekannt. In der Regel werden sie nach einem Sol-Gel-Verfahren hergestellt. Die Kondensate finden für die verschiedensten Zwecke Verwendung, z.B. als Formmassen, als Lacke für Überzüge und dergleichen.

Wenn die erfindungsgemäßen Verbindungen der Formel I Gruppen X enthalten, sind sie im basischen oder sauren Milieu hydrolysier- und kondensierbar, ohne daß dadurch bereits eine Verknüpfung über die organisch polymerisierbaren Gruppen in das entstehende Polymerisat erfolgt. Dadurch ist es möglich, sie in beliebige Netzwerke einzubauen, die entweder ausschließlich aus Verbindungen der Formel I bestehen können, oder aber in Mischung mit anderen Silanen, wie sie aus dem Stand der Technik bekannt sind. Außerdem sollte es möglich sein, durch Polymerisation der im Rest B enthaltenen organischen Gruppen ein organisches Netzwerk aufzubauen. Dadurch sollten sich diese Verbindungen in einer Vielzahl von Beschichtungs-, Füll-, Klebe- und Dichtungsmassen, in Formkörpern und Einbettmassen einsetzen lassen.

Die vorliegende Erfindung stellt dementsprechend weiterhin KieselsäurePolykondensate bereit, die unter Einarbeitung von Silanen der allgemeinen Formel I

(XₐR_{b}Si)ₘ[―{B}―([O]ₒP[O]ₚR'_{c}Y_{d})ₙ]_{4-a-b} I

hergestellt sind. In den Silanen der Formel I haben die Reste und Indices die folgende Bedeutung:
B ist ein geradkettiger oder verzweigter Rest mit einer oder mehreren organisch polymerisierbaren Gruppen, bei denen es sich vorzugsweise um C=C-Doppelbindung handelt, und mindestens 3 Kohlenstoffatomen,
X ist ein vom Siliciumatom abhydrolysierbarer Rest, insbesondere Wasserstoff, Halogen und hier vorzugsweise Chlor, Hydroxy, Alkoxy mit vorzugsweise 1 bis 4 Kohlenstoffatomen, Acyloxy mit vorzugsweise 2 bis 5 Kohlenstoffatomen, Alkylcarbonyl mit vorzugsweise 2 bis 6 Kohlenstoffatomen, Alkoxycarbonyl mit vorzugsweise 2 bis 6 Kohlenstoffatomen oder NR" und kann in einer Verbindung der Formel I gegebenenfalls unterschiedliche Bedeutung haben,
R ist ggf. substituiertes Alkyl, Alkenyl, Aryl, Alkylaryl oder Arylalkyl mit vorzugsweise 1-6 Kohlenstoffatomen für offenkettige aliphatische Gruppen und vorzugsweise 6 bis 12 Kohlenstoffatome für cycloaliphatische oder aromatische Gruppen, wobei die Substitution beispielsweise mit Halogen oder Aminogruppen erfolgen kann,
R' kann dieselbe Bedeutung wie R haben,
Y ist CI, OH oder OR'.
R" ist Wasserstoff, Alkyl mit vorzugsweise 1-4 Kohlenstoffatomen oder Aryl mit vorzugsweise 6-12 Kohlenstoffatomen,
a ist 0, 1, 2 oder 3,
b ist 0, 1, oder 2,
a + b sind zusammen 1, 2 oder 3,
c ist 0, 1 oder 2,
d ist 0, 1 oder 2,
c + d sind zusammen 2
m ist vorzugsweise 1, kann aber auch 2, 3, 4 oder ggf. sogar eine höhere Zahl sein, mit der Maßgabe, daß m nicht mehr als 1 ist, wenn a+ b 1 oder 2 bedeutet,
n ist vorzugsweise 1, kann aber auch 2, 3, 4 oder ggf. sogar eine höhere Zahl sein,
o ist 0 oder 1, und
p ist 0 oder 1.

Die Polykondensate können ausschließlich aus Verbindungen der Formel I aufgebaut sein; diese können aber auch zusammen mit weiteren hydrolysierten Silanen und/oder anderen Metallverbindungen und/oder Füllstoffen und/oder Hilfsmitteln das genannte Polykondensat bilden. Man erhält die Polykondensate durch Hydrolyse und Kondensation der Silanverbindungen der Formel I, erforderlichenfalls in Gegenwart weiterer einzuarbeitender Substanzen, z.B. von Kondensationskatalysatoren, wie sie aus dem Stand der Technik bekannt sind.

Die erfindungsgemäßen Kieselsäurepolykondensate können für eine Vielzahl von Anwendungen eingesetzt werden. Hier sei nur beispielhaft auf Beschichtungsmassen, Bindemittel für keramische Partikel, Klebstoffe oder Vergußmassen hingewiesen. Die Anwesenheit von phosphorhaltigen Resten in den Polykondensaten oder Beschichtungen oder Massen wie voranstehend beschrieben verleiht den Produkten bisher nicht bekannte Eigenschaften. Neben der bereits erwähnten Verbesserung der Flammfestigkeit sei hier folgendes erwähnt: Da der phosphorhaltige Rest ein Ladungsträger ist, wird das Verhalten der Polykondensate in Dispersionen oder Emulsionen verändert. Dies kann bei der Verwendung als Elektrotauchlackierung von Vorteil sein. Damit hergestellte Massen haben ein verändertes Leitfähigkeitsverhalten und ein anderes antistatatisches Verhalten, Produkte sollten ein verbessertes Korrosionsschutzverhalten zeigen. Die Löslichkeit von Verbindungen mit der Formel I in polaren Soventien ist besser, so daß ihre Verarbeitung in einem anderen Spektrum von Solventien möglich ist.

Nachstehend soll die Erfindung anhand von Ausführungsbeispielen näher erläutert werden.

### Beispiel 1

Umsetzung von Trimethylolpropantriacrylat mit 3-Mercaptopropylmethyldimethyloxysilan (in der DE-PS 40 11 044 und der EP 0451709 beschrieben) und anschließend mit Diethylphosphit.

### Reaktionsschema:

Umsetzung eines Dimethacrylatsilanes mit Diethylphosphit und anschließender Hydrolyse und Kondensation

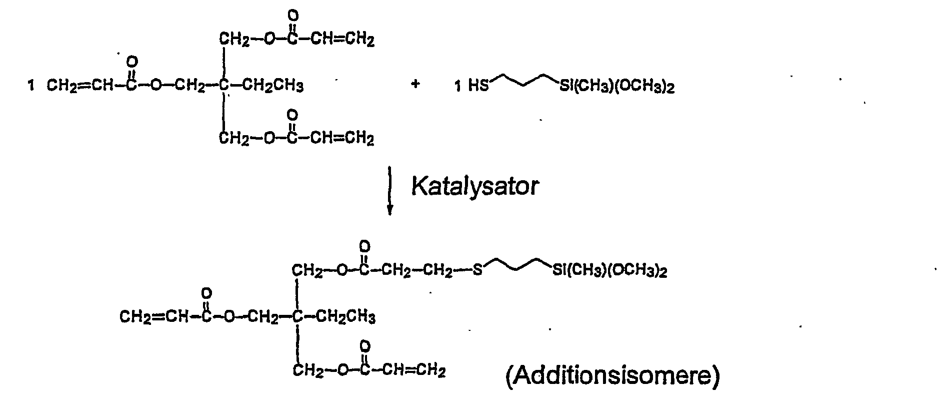

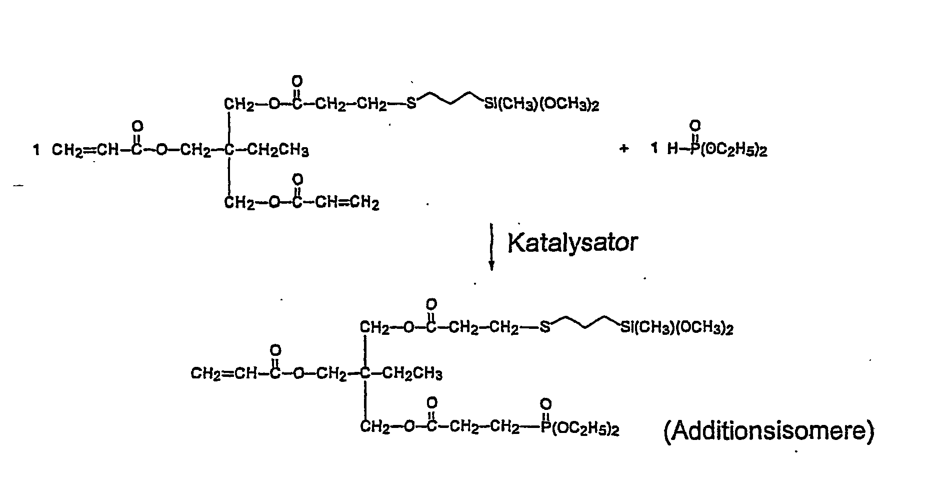

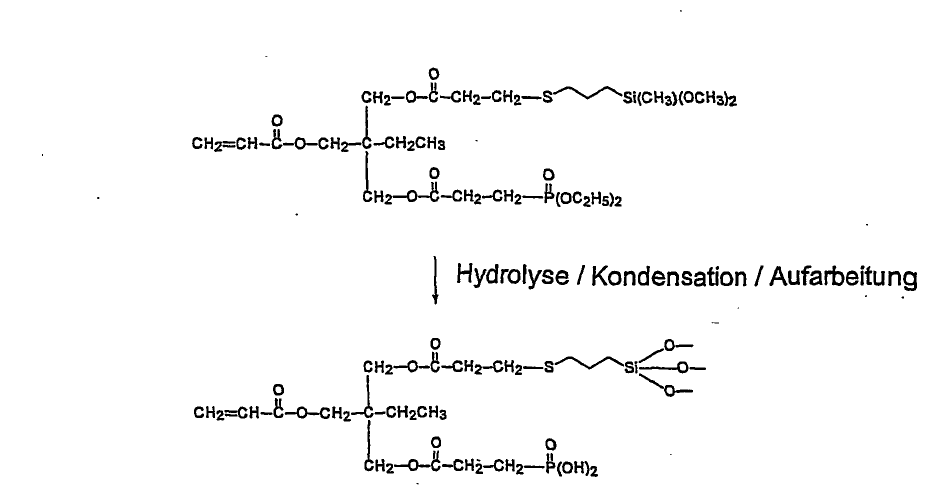

Zur Vorlage von 4,61 g (15,5 mmol) Trimethylolpropantriacrylat (TMPTA) wird unter Kühlung, trockener Schutzgasatmosphäre und Rühren 1,06 g eine ethanolischen KOH-Lösung zugetropft. Unter den gleichen Bedingungen werden 2,80 g (15,5 mmol) 3-Mercaptopropylmethyldimeth-oxysilan zugetropft wobei die Temperatur im Reaktionsgefäß etwas ansteigt. In ca. 5 Minuten findet ein vollständiger Umsatz der SH-Gruppen statt (nachweisbar mittels Jod-Test) und die Reaktion (Thioladdition) ist abgeschlossen. Das resultierende klare Reaktionsgemisch wird unter obigen Bedingungen zunächst mit 2,13 g Diethylphosphit (15,5 mmol) und anschließend mit einer 25%-igen Natriummethanolat-Lösung als Katalysator versetzt. Der Reaktionsverlauf und somit der vollständige Umsatz dieser exothermen PH-Addition kann mittels IR-Spektroskopie anhand folgender Änderungen nachgewiesen werden:
- Verschwinden der ν_{PH}-Bande bei 2431 cm-¹
- Abnahme der ν_{CH}-Bande (Olefin) bei 3040 cm⁻¹
- Abnahme der ν_{C=C}-Banden bei 1635 / 1619 cm⁻¹.

Das resultierende Phosphonat-modifizierte Acrylatsilan (Isomerengemisch) kann durch übliche Aufarbeitung in Form einer viskosen Flüssigkeit isoliert oder bevorzugt direkt weiter umgesetzt werden.

### Beispiel 2

Umsetzung von Glycerin-1,3-dimethacrylat mit 3-Isocyanatopropyltriethoxysilan (in der DE-PS 40 11 044 und der EP 0451709 beschrieben)und anschließend mit Diethylphosphit

### Reaktionsschema:

Umsetzung eines Diacrylatsilanes mit Diethylphosphit und anschließender Hydrolyse und Kondensation

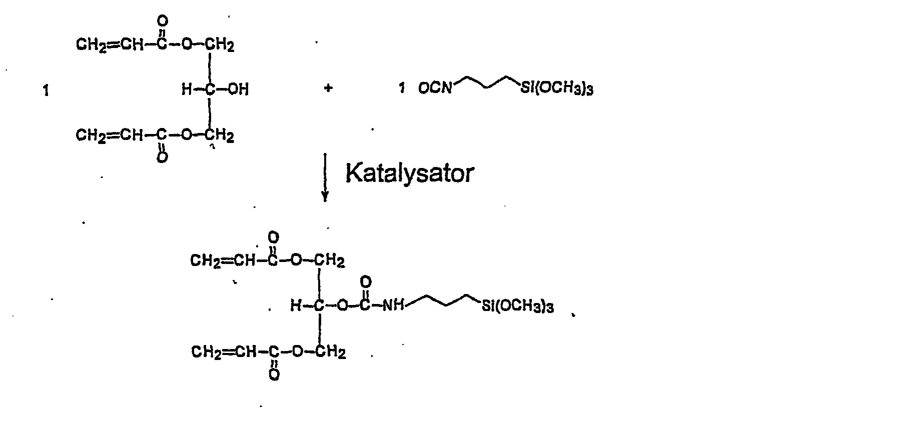

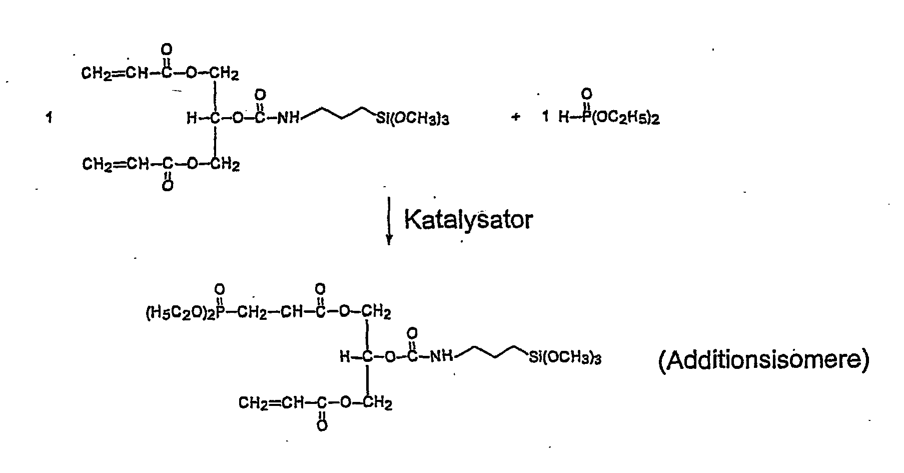

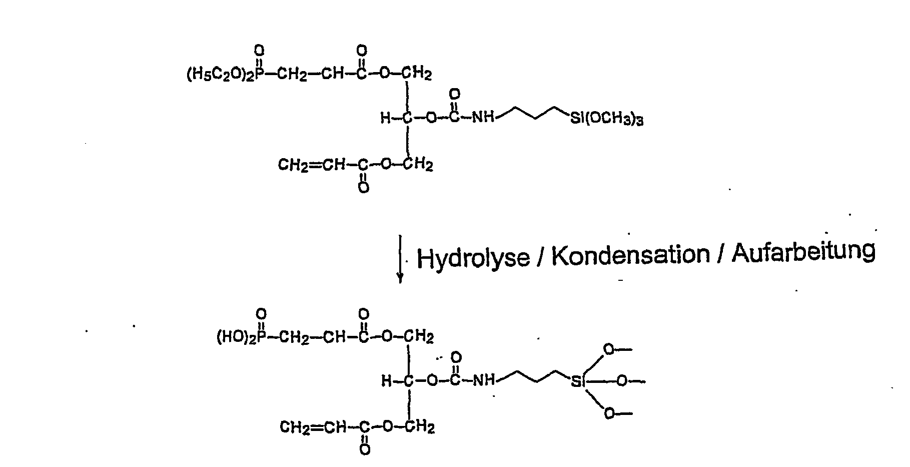

Zur Vorlage von 17,12 g (75,0 mmol) Glycerin-1,3-dimethacrylat und Dibutylzinndifaurat als Additionskatalysator wird bei 30°C unter trockener Atmosphäre und Rühren 18,55 g (75,0 mmol) 3-Isocyanatopropyltriethoxysilan zugetropft. Der Verlauf der Umsetzung (Addition der NCO-Gruppe des Silans an die OH-Gruppe des Methacrylates) wird mittels IR verfolgt. Nach vollständigem Umsatz werden bei Raumtemperatur unter trockener Schutzgasatmosphäre und Rühren zunächst 10,31 g Diethylphosphft (75,0 mmol) und anschließend eine 25%-ige Natriummethanolat-Lösung als Katalysator zugetropft. Der Reaktionsverlauf und somit der vollständige Umsatz dieser exothermen PH-Addition kann mittels IR-Spektroskopie anhand folgender Änderungen nachgewiesen werden:
- Verschwinden der ν_{PH}-Bande bei 2431 cm⁻¹
- Abnahme der ν_{CH}-Bande (Olefin) bei 3040 cm⁻¹
- Abnahme der ν_{c=c}-Banden bei 1638 cm⁻¹.

Das resultierende Phosphonat-modifizierte Methacrylatsilan (Isomerengemisch) kann durch übliche Aufarbeitung in Form einer viskosen Flüssigkeit isoliert werden oder bevorzugt direkt weiter umgesetzt werden.

### Beispiel 3

### Hydrolyse und Kondensation der in Beispiel 2 erhaltenen Verbindung

Zur Hydrolyse und Kondensation obigen Reaktionsgemisches werden ca. 75 ml Essigester sowie wäßrige HCl zugesetzt. Der Hydrolyseverlauf (bzgl. Si(OC₂H₅)₃ und PO(OC₂H₅)₂) wird über den Wasserverbrauch mittels H₂O-Titration verfolgt. Nach vollständiger Hydrolyse der Ethoxygruppen sollte sich die resultierende Lösung z. B. zum Beschichten (mit anschließender Härtung, d. h. Polymerisation der Methacrylatgruppen) von beliebigen Substraten eignen.

## Patentansprüche

1. Verbindungen der Formel I
(XₐR_{b}Si)ₘ[―{B}―([O]ₒP[O]ₚR'_{c}Y_{d})ₙ]_{4-a-b} I
worin die Gruppen, Reste und Indices die folgende Bedeutung haben:
B ist eine mindestens zweibindige, geradkettige oder verzweigte Gruppe mit mindestens einem organisch polymerisierbaren Rest und mindestens 3 Kohlenstoffatomen,
X ist ein vom Siliciumatom abhydrolysierbarer Rest,
R ist ggf. substituiertes Alkyl, Alkenyl, Aryl, Alkylaryl oder Arylalkyl,
R' hat dieselbe Bedeutung wie R,
Y ist Cl, OH oder OR'.
a ist 0, 1, 2 oder 3,
b ist 0, 1, oder 2,
a + b sind zusammen 1, 2 oder 3,
c ist 0, 1 oder 2,
d ist 0, 1 oder 2,
c + d sind zusammen 2
m ist mindestens 1, mit der Maßgabe, daß m nicht mehr als 1 ist, wenn a + b 1 oder 2 bedeutet,
n ist mindestens 1,
o ist 0 oder 1, und
p ist 0 oder 1.

2. Verbindungen der Formel I nach Anspruch 1, worin
X Wasserstoff, Halogen, Hydroxy, Alkoxy, Acyloxy, Alkylcarbonyl, Alkoxycarbonyl oder NR" ist und in einer Verbindung der Formel I gegebenenfalls unterschiedliche Bedeutung haben kann, und
R" Alkyl mit 1-4 Kohlenstoffatomen oder Aryl mit 6-12 Kohlenstoffatomen ist.

3. Verbindungen der Formel I nach Anspruch 1 oder 2, worin B mindestens eine Norbornen-, Acrylat- oder Methacrylatgruppe enthält.

4. Verbindungen der Formel I nach einem der voranstehenden Ansprüche, worin der Index o null ist.

5. Verbindungen der Formel I nach einem der Ansprüche 1 bis 3, worin der Index o gleich 1 ist.

6. Verbindungen der Formel I nach Anspruch 5, worin der Index p 1 ist und der Index c null ist.

7. Kieselsäure-Polykondensat, erhalten durch hydrolytische Kondensation unter Verwendung mindestens einer Verbindung mit der Formel I
(XₐR_{b}Si)ₘ[―{B}―([O]ₒP[O]ₚR'_{c}Y_{d})ₙ]_{4-a-b} I
worin die Gruppen, Reste und Indices die folgende Bedeutung haben:
B ist ein mindestens zweibindiger, geradkettiger oder verzweigter Rest mit mindestens einer organisch polymerisierbaren Gruppe und mindestens 3 Kohlenstoffatomen,
X ist ein vom Siliciumatom abhydrolysierbarer Rest,
R ist ggf. substituiertes Alkyl, Alkenyl, Aryl, Alkylaryl oder Arylalkyl,
R' hat dieselbe Bedeutung wie R,
Y ist Cl, OH oder OR'
a ist 0, 1, 2 oder 3,
b ist 0, 1, oder 2,
a + b sind zusammen 1, 2 oder 3,
c ist 0, 1 oder 2,
d ist 0, 1 oder 2,
c + d sind zusammen 2
m ist mindestens 1, mit der Maßgabe, daß m nur 1 sein kann, wenn a + b 1 oder 2 ist,
n ist vorzugsweise 1
o ist 0 oder 1, und
p ist 0 oder 1,
und gegebenenfalls weiterer hydrolysierbarer und kondensierbarer Silane und/oder weiterer hydrolytisch kondensierbarer Verbindungen von Elementen aus der Gruppe B, Al, P, Sn, Pb, der Übergangsmetalle, der Lanthaniden und der Aktiniden, gegebenenfalls in Mischung mit weiteren Bestandteilen.

8. Kieselsäure-Polykondensat nach Anspruch 7, **dadurch gekennzeichnet, daß** in der Verbindung mit der Formel I die Gruppe B einen oder mehrere organisch polymerisierbare Reste enthält, der Substituent X Wasserstoff, Halogen, Hydroxy, Alkoxy, Acyloxy, Alkylcarbonyl, Alkoxycarbonyl oder NR" ist und gegebenenfalls unterschiedliche Bedeutung haben kann und der Substituent R" Alkyl mit 1-4 Kohlenstoffatomen oder Aryl mit 6-12 Kohlenstoffatomen ist.

9. Kieselsäure-Polykondensat nach einem der Ansprüche 7 oder 8, **dadurch gekennzeichnet, daß** in der Verbindung mit der Formel I die Gruppe B mindestens eine Norbornen-, Acrylat- oder Methacrylatgruppe enthält.

10. Verfahren zum Herstellen von Verbindungen der Formel I wie in Anspruch 4 definiert, **gekennzeichnet durch** Umsetzen einer Verbindung mit der Formel II
(XₐR_{b}Si)ₘ[―{B¹}]_{4-a-b} II
worin die Reste und Indices X, R, a, b und m die Bedeutung wie in Formel I gemäß Anspruch 1 definiert haben und B¹ ein Derivat der Gruppe B wie in Formel I des Anspruch 1 definiert mit einer zusätzlichen organisch polymerisierbaren Gruppe und einer um 1 geringeren Bindigkeit ist, mit einer Verbindung mit der Formel III
H-P[O]ₚR'_{c}Y_{d} III
worin die Reste und Indices R', Y, c und d die in Formel I des Anspruch 1 angegebene Bedeutung besitzen und p 1 ist.

11. Verfahren zum Herstellen einer Verbindung mit der Formel I wie in Anspruch 6 definiert, **dadurch gekennzeichnet, daß** eine Verbindung mit der Formel IV
(XₐR_{b}Si)ₘ[―{B²}_{4-a-b} IV
worin die Reste und Indices X, R, a, b und m die Bedeutung wie in Formel I des Anspruch 1 definiert besitzen und B² ein Derivat der Gruppe B wie in Formel I des Anspruch 1 definiert mit einer zusätzlichen OH-Gruppe und einer um 1 geringeren Bindigkeit ist, in Gegenwart eines basischen Katalysators mit POCl₃ umgesetzt wird, anschließend das entstandene HCI abgetrennt wird, ggf. durch Alkoholyse oder Hydrolyse Gruppen Y mit der Bedeutung CI in Gruppen mit der Bedeutung OH oder OR' überführt werden und schließlich die entstandene Verbindung mit der Formel I von Nebenprodukten gereinigt wird.

12. Verfahren zum Herstellen einer Verbindung der Formel I wie in Anspruch 6 definiert, worin der Rest Y OH ist und der Index d 2 bedeutet, **dadurch gekennzeichnet, daß** eine Verbindung mit der Formel IV
(XₐR_{b}Si)ₘ[―{B²}]_{4-a-b} IV
worin die Reste und Indices X, R, a, b und m die Bedeutung wie in Formel I des Anspruch 1 definiert besitzen und B² ein Derivat der Gruppe B wie in Formel I des Anspruch 1 definiert mit einer zusätzlichen OH-Gruppe und einer um 1 geringeren Bindigkeit ist, mit P₂O₅ umgesetzt wird.

13. Verfahren zum Herstellen einer Verbindung der Formel I wie in Anspruch 4 definiert, **gekennzeichnet durch** Umsetzung einer Verbindung mit der Formel V
(XₐR_{b}si)ₘ[―{B³}]_{4-a-b} V
worin die Gruppe B³ ein Derivat der Gruppe B wie in Formel I des Anspruch 1 definiert mit einem zusätzlichen Halogenatom und einer um 1 geringeren Bindigkeit ist, mit einer Phosphorverbindung der Formel VI
R'_{c}PY_{d}, VI
worin R' und Y die für Formel I in Anspruch 1 angegebenen Bedeutungen besitzen und c 0, 1 oder 2 ist, d 1, 2 oder 3 ist und c + d 3 ist.

## Claims

1. Compounds of Formula I
(XₐR_{b}Si)ₘ[―{B}―([O]ₒP[O]ₚR'_{c}Y_{d})ₙ]_{4-a-b} I
wherein the groups, radicals and indices have the following meanings:
B is an at least a divalent, straight-chained or branched group with at least one organically polymerisable radical and at least 3 carbon atoms,
X is a radical that can be cleaved from the silicon atom by hydrolysis,
R is an optionally substituted alkyl, alkenyl, aryl, alkylaryl or arylalkyl,
R' has the same meaning as R,
Y is Cl, OH or OR',
a is 0, 1, 2 or 3,
b is 0, 1, or 2,
a + b together are 1, 2 or 3,
c is 0, 1 or 2
d is 0, 1 or 2,
c + d together are 2,
m is at least 1, with the proviso that m is not greater than 1, when a + b means 1 or 2,
n is at least 1,
o is 0 or 1, and
p is 0 or 1.

2. Compounds of Formula I pursuant to Claim 1, wherein
X is hydrogen, halogen, hydroxy, alkoxy, acyloxy, alkylcarbonyl, alkoxycarbonyl or NR" and may have different meanings in a compound of the Formula I, if applicable, and
R" is alkyl with 1-4 carbon atoms or aryl with 6-12 carbon atoms.

3. Compounds of Formula I pursuant to Claim 1 or 2, wherein B contains at least one norbornene, acrylate or methacrylate group.

4. Compounds of Formula I pursuant to one of the previous claims, wherein the index o is zero.

5. Compounds of the Formula I pursuant to one of Claims 1 through 3, wherein the index o is equal to 1.

6. Compounds of Formula I pursuant to Claim 5, wherein index p is 1 and index c is zero.

7. Silicic acid polycondensate, obtained through hydrolytic condensation using at least one compound of Formula I
₍XₐR_{b}Si)ₘ[-{B}-([O]ₒP[O]ₚR'_{c}Y_{d})ₙ]_{4-a-b} I,
wherein the groups, radicals and indices have the following meanings:
B is an at least divalent, straight-chained or branched group with at least one organically polymerisable group and at least 3 carbon atoms,
X is a radical that can be cleaved from the silicon atom by hydrolysis,
R is an optionally substituted alkyl, alkenyl, aryl, alkylaryl or arylalkyl,
R' has the same meaning as R,
Y is Cl, OH or OR',
a is 0, 1, 2 or 3,
b is 0, 1 or 2,
a + b together are 1, 2 or 3,
c is 0, 1 or 2,
d is 0, 1 or 2,
c + d together are 2,
m is at least 1, with the proviso that m can only be 1 when a + b means 1 or 2,
n is preferably 1,
o is 0 or 1, and
p is 0 or 1,
and optionally further hydrolysable and condensable silanes and/or further hydrolytically condensable compounds of elements from the group of B, Al, P, Sn, Pb, the transition metals, the lanthanides and the actinides, possibly in mixture with further constituents.

8. Silicic acid polycondensate pursuant to Claim 7, **characterized in that** in the compound of Formula I, group B contains one or more organically polymerisable radicals, the substituent X is hydrogen, halogen, hydroxy, alkoxy, acyloxy, alkylcarbonyl, alkoxycarbonyl or NR" and may have different meanings if applicable, and the substituent R" is alkyl with 1-4 carbon atoms or aryl with 6-12 carbon atoms.

9. Silicic acid polycondensate pursuant to Claim 7 or 8, **characterized in that** in the compound of Formula I, group B contains at least one norbornene, acrylate or methacrylate group.

10. Method for producing compounds of Formula I as defined in Claim 4, **characterized by** the reaction of a compound of Formula II
(XₐR_{b}Si)ₘ[-{B¹}]_{4-a-b} II,
wherein the radicals and indices X, R, a, b and m have the meanings as defined in Formula I of Claim 1 and B¹ is a derivative of the group B as defined in Formula I of Claim 1 having one additional organically polymerisable group and a valency that is lower by 1, with a compound of the Formula III
H-P[O]ₚR'_{c}Y_{d} III,
wherein the radicals and indices R', Y, c and d have the meanings provided in Formula I of claim 1 and p is 1.

11. Method for producing compounds of Formula I as defined in Claim 6, **characterized in that** a compound of Formula IV
(XₐR_{b}Si)ₘ[-{B²}]_{4-a-b} IV,
wherein the radicals and indices X, R, a, b and m have the meanings as defined in Formula I of Claim 1 and B² is a derivative of the group B as defined in Formula I of Claim 1 having one additional OH group and a valency that is lower by 1, is reacted in the presence of an alkaline catalyst with POCl₃, subsequently the developed HCl is removed, optionally groups Y with the meaning Cl are converted by alkoholysis or hydrolysis into groups with the meaning OH or OR', and subsequently the obtained compound having Formula I is purified from by-products.

12. Method for producing a compound of Formula I as defined in Claim 6, wherein the radical Y is OH and the index d means 2, **characterized in that** a compound of Formula IV
(XₐR_{b}Si)ₘ[-{B²}]_{4-a-b} IV,
wherein the radicals and indices X, R, a, b and m have the meanings as defined in Formula I of Claim 1 and B² is a derivative of the group B as defined in Formula I of Claim 1 having one additional OH group and a valency that is lower by 1, is reacted with P₂O₅.

13. Method for producing a compound of Formula I as defined in Claim 4, **characterized by** the reaction of a compound of Formula V
(XₐR_{b}Si)ₘ[-{B³}]_{4-a-b} V,
wherein the group B³ is a derivative of the group B as defined in Formula I of Claim 1 with one additional halogen atom and a valency that is lower by 1, with a phosphorous compound of the Formula VI,
R'_{c}PY_{d} VI
wherein R' and Y have the meanings as defined for Formula I in Claim 1 and c is 0, 1 or 2, d is 1, 2 or 3 and c + d is 3.

## Revendications

1. Composés de formule I
**(XₐR_{b}Si)ₘ[―{B}―([O]ₒP[O]ₚR'_{c}Y_{d})ₙ]_{4-a-b}** I
dans laquelle les groupes, radicaux et indices ont les significations suivantes :
B est un groupe ayant au moins deux liaisons, à chaîne linéaire ou ramifiée, avec au moins un radical organiquement polymérisable et au moins 3 atomes de carbone,
X est un radical pouvant être clivé de l'atome de silicium par hydrolyse,
R est un groupe alkyle, alcényle, aryle, alkylaryle ou arylalkyle éventuellement substitué,
R' a la même signification que R,
Y signifie Cl, OH ou OR',
a est 0, 1, 2 ou 3,
b est 0, 1 ou 2,
a + b signifient ensemble 1, 2 ou 3,
c est 0, 1 ou 2,
d est 0, 1 ou 2,
c + d signifient ensemble 2,
m est au moins 1, dans la mesure où m n'est pas supérieur à 1 lorsque a + b signifient 1 ou 2,
n est au moins 1,
o est 0 ou 1 et
p est 0 ou 1.

2. Composés de formule I selon la revendication 1, où X est l'hydrogène, un halogène, un groupe hydroxy, alcoxy, acyloxy, alkylcarbonyle, alcoxycarbonyle ou NR" et peut avoir le cas échéant une signification différente dans un composé de formule I, et
R" est un groupe alkyle ayant 1 à 4 atomes de carbone ou un groupe aryle ayant 6 à 12 atomes de carbone.

3. Composés de formule I selon la revendication 1 ou 2, où B contient au moins un groupe norbornène, acrylate ou méthacrylate.

4. Composés de formule I selon l'une des revendications précédentes, où l'indice o est 0.

5. Composés de formule I selon l'une des revendications 1 à 3, où l'indice o est égal à 1.

6. Composés de formule I selon la revendication 5, où l'indice p est 1 et l'indice c est 0.

7. Polycondensat d'acide silicique obtenu par hydrolyse-condensation d'au moins un composé de formule I
**(XₐR_{b}Si)ₘ[―{B}―([O]ₒP[O]ₚR'_{c}Y_{d})ₙ]_{4-a-b}** I
dans laquelle les groupes, radicaux et indices ont la signification suivante:
B est au moins un radical ayant au moins deux liaisons, linéaire ou ramifié avec au moins un groupe organiquement polymérisable et
au moins 3 atomes de carbone,
X est un radical pouvant être clivé de l'atome de silicium par hydrolyse,
R est un groupe alkyle, alcényle, aryle, alkylaryle ou arylalkyle éventuellement substitué,
R' a la même signification que R,
Y signifie Cl, OH ou OR';
a est 0, 1, 2 ou 3,
b est 0, 1 ou 2,
a + b signifient ensemble 1, 2 ou 3,
c est 0, 1 ou 2,
d est 0, 1 ou 2,
c + d signifient ensemble 2,
m est au moins 1, dans la mesure où m ne peut être que 1 lorsque a + b signifient 1 ou 2,
n est de préférence 1,
O est 0 ou 1 et
p est 0 ou 1,
et éventuellement d'autres silanes hydrolysables et condensables et/ou d'autres composés hydrolytiquement condensables d'éléments faisant partie du groupe B, Al, P, Sn, Pb, des métaux de transition, des lanthanides et des actinides, mélangés éventuellement à d'autres constituants.

8. Polycondensat d'acide silicique selon la revendication 7, **caractérisé en ce que**, dans le composé de formule I, le groupe B contient un ou plusieurs radicaux organiquement polymérisables, le substituant X est l'hydrogène, un halogène, un groupe hydroxy, alcoxy, acyloxy, alkylcarbonyle, alcoxycarbonyle ou NR" et peut éventuellement avoir une signification différente et le substituant R" est un groupe alkyle ayant 1 à 4 atomes de carbone ou un groupe aryle ayant 6 à 12 atomes de carbone.

9. Polycondensat d'acide silicique selon l'une des revendications 7 ou 8, **caractérisé en ce que**, dans le composé de formule I, le groupe B contient au moins un groupe norbornène, acrylate ou méthacrylate.

10. Procédé pour produire des composés de formule I comme défini dans la revendication 4, **caractérisé en ce qu'**on fait réagir un composé de formule II
**(XₐR_{b}Si)ₘ[―{B¹}]_{4-a-b}** II
dans laquelle les radicaux et indices X, R, a, b et m ont la même signification que dans la formule I selon la revendication 1 et B¹ est un dérivé du groupe B comme dans la formule I de la revendication 1 défini avec un groupe organiquement polymérisable additionnel et une valence inférieure à 1 environ, avec un composé de formule III
**H-P[O]ₚR'_{c}Y_{d}** III
dans laquelle les radicaux et indices R', Y, c et d ont la signification donnée dans la formule I de la revendication 1 et p est 1.

11. Procédé pour produire un composé avec la formule I comme défini dans la revendication 6, **caractérisé en ce qu'**on fait réagir avec du POCl₃ en présence d'un catalyseur alcalin un composé de formule IV
**(XₐR_{b}Si)ₘ[―{B²}]_{4-a-b}** IV
dans laquelle les radicaux et indices X, R, a, b et m ont la signification donnée dans la formule I de la revendication 1 et B² est un dérivé du groupe B comme défini dans la formule I de la revendication 1 avec un groupe OH additionnel et une valence inférieure à 1 environ, ensuite le HCl produit est clivé, éventuellement par alcoolyse ou hydrolyse, les groupes Y désignant Cl sont éventuellement transformés en groupes désignant OH ou OR' et enfin, le composé produit est débarrassé de ses produits secondaires avec la formule I.

12. Procédé pour produire un composé de formule I comme défini dans la revendication 6, dans lequel le radical Y est OH et l'indice d est 2, **caractérisé en ce qu'**on fait réagir avec du P₂O₅ un composé de formule IV
**(XₐR_{b}Si)ₘ[―{B²}]_{4-a-b}** IV
dans laquelle les radicaux et indices X, R, a, b et m ont la signification comme défini dans la formule I de la revendication 1 et B² est un dérivé du groupe B comme défini dans la formule I de la revendication 1 avec un groupe OH additionnel et une valence inférieure à 1 environ.

13. Procédé pour produire un composé de formule I comme défini dans la revendication 4, **caractérisé par** la réaction d'un composé de formule V
**(XₐR_{b}Si)ₘ[―{B³}]_{4-a-b}** V
dans laquelle le groupe B³ est un dérivé du groupe B comme défini dans la formule I de la revendication 1 avec un atome d'halogène additionnel et une valence inférieure à 1 environ, avec un composé du phosphore de formule VI
**R'_{c}PY_{d},** VI
dans laquelle R' et Y ont les significations données pour la formule I de la revendication 1 et c est 0, 1 ou 2, d est 1, 2 ou 3 et c + d signifient ensemble 3.
